(19) Europäisches Patentamt
European Patent Office
Office européen des brevets

(11) **EP 2 202 875 B1**

(12) **FASCICULE DE BREVET EUROPEEN**

(45) Date de publication et mention
de la délivrance du brevet:
**21.08.2013 Bulletin 2013/34**

(51) Int Cl.:
***H02M 7/493*** *(2007.01)*

(21) Numéro de dépôt: **09306210.7**

(22) Date de dépôt: **11.12.2009**

(54) **Système de conversion d'au moins un courant électrique continu d'entrée en un courant électrique alternatif polyphasé de sortie**

Konversionssystem mindestens eines elektrischen Eingangsgleichstroms in einen mehrphasigen Ausgangswechselstrom

System for converting at least one direct-current electric input to a multi-phase alternating-current electric output

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **24.12.2008 FR 0859062**

(43) Date de publication de la demande:
**30.06.2010 Bulletin 2010/26**

(73) Titulaire: **GE Energy Power Conversion Technology Limited**
**Rugby**
**Warwickshire CV21 1BU (GB)**

(72) Inventeurs:
• **Costan, Valentin**
**92120 Montrouge (FR)**
• **Gollentz, Bernard**
**68360, SOULTZ (FR)**

(74) Mandataire: **Jacobson, Claude**
**Cabinet Lavoix**
**2, Place d'Estienne d'Orves**
**75441 Paris Cedex 09 (FR)**

(56) Documents cités:
WO-A-90/10339      DE-A1- 3 826 524
JP-A- 1 055 078      JP-A- 2008 178 180
KR-A- 20010 083 809      KR-B1- 100 428 459
US-B1- 6 169 677

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un système de conversion d'au moins un courant électrique continu d'entrée en un courant électrique alternatif de sortie comportant une pluralité M de phases et délivré en M bornes de sortie, chaque borne de sortie correspondant à une phase du courant de sortie, du type comprenant :

- N onduleurs polyphasés, connectés en parallèle les uns des autres et reliés chacun à un bus de circulation d'un courant électrique continu d'entrée, chaque onduleur étant propre à convertir le courant continu d'entrée en un courant alternatif intermédiaire comportant M phases et délivré en M bornes intermédiaires, chaque borne intermédiaire correspondant à une phase du courant intermédiaire ;
- N x M premières bobines électromagnétiques de couplage, chacune étant reliée par une de ses extrémités à une borne respective des M bornes intermédiaires d'un des N onduleurs polyphasés ;
- N x M noyaux magnétiques, chaque première bobine électromagnétique étant enroulée autour d'un noyau respectif.

L'invention concerne également un module de conversion d'un courant électrique continu d'entrée fourni en deux bornes d'entrée, en un courant électrique alternatif de sortie comportant une pluralité M de phases et délivré en M bornes de sortie, chaque borne de sortie correspondant à une phase du courant de sortie.

L'invention concerne également un système de conversion équipé d'une pluralité de modules de conversion connectés en parallèle les uns des autres.

L'invention concerne également un équipement électrique de puissance équipé d'au moins un tel système de conversion.

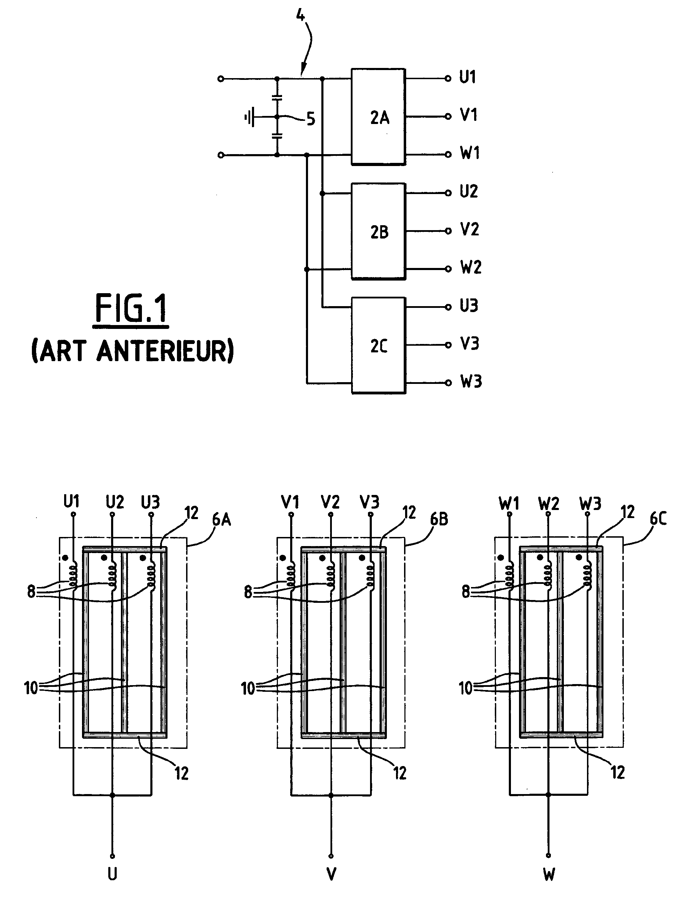

On connaît du document US 6,169,677 un système de conversion du type précité. Le but d'un tel système de conversion est de permettre de connecter en parallèle une pluralité N d'onduleurs identiques de tension polyphasés avec une imbrication des impulsions de manière à améliorer la forme d'onde de la tension de sortie, la mise en parallèle des N onduleurs permettant d'obtenir une tension de sortie de puissance plus élevée. La figure 1 illustre un tel système de conversion.

Il est précisé que deux points repérés par une même lettre sur la figure 1 et sur les autres figures décrites par la suite sont, par convention, reliés entre eux par une liaison électrique non représentée, afin de faciliter la lecture du schéma.

On voit sur la figure 1, trois onduleurs triphasés 2A, 2B, 2C connectés en parallèle à un unique bus 4 de circulation d'un courant électrique continu d'entrée. Le bus d'entrée 4 comporte un point milieu capacitif 5 relié à la masse électrique. Chaque onduleur 2A, 2B, 2C est propre à convertir le courant continu d'entrée en un courant triphasé intermédiaire délivré en trois bornes intermédiaires Ui, Vi, Wi, i étant respectivement égal à 1, 2 ou 3, correspondant respectivement aux onduleurs 2A, 2B, 2C. Chaque borne intermédiaire Ui, Vi, Wi correspond à une phase respective du courant triphasé intermédiaire. Le système de conversion comprend également trois coupleurs magnétiques 6A, 6B, 6C, chacun étant disposé en sortie d'un onduleur 2A, 2B, 2C respectif. Chacun des trois coupleurs magnétiques 6A, 6B, 6C comporte trois bobines électromagnétiques de couplage 8, toutes identiques. Chaque bobine de couplage 8 est enroulée autour d'un noyau 10 respectif, les trois noyaux 10 d'un coupleur magnétique 6A, 6B, 6C étant reliés entre eux par des barreaux magnétiques de liaison 12. Un noyau 10 muni d'une bobine de couplage 8 forme une colonne bobinée.

Les trois bobines de couplage 8 du premier coupleur magnétique 6A sont chacune reliées par une de leurs extrémités à une borne intermédiaire U1, U2, U3 respective, les bornes intermédiaires U1, U2, U3 correspondant à la première phase de chaque onduleur triphasé 2A, 2B, 2C, et par leur autre extrémité à une même borne de sortie U correspondant à la première phase du courant triphasé de sortie.

De même, les trois bobines de couplage 8 du deuxième coupleur magnétique 6B sont chacune reliées par une de leurs extrémités à une borne intermédiaire V1, V2, V3 respective, et par leur autre extrémité à une même borne de sortie V correspondant à la deuxième phase du courant triphasé de sortie. De même, les trois bobines de couplage 8 du troisième coupleur magnétique 6C sont chacune reliées par une de leurs extrémités à une borne intermédiaire W1, W2, W3 respective, et par leur autre extrémité à une même borne de sortie W correspondant à la troisième phase du courant triphasé de sortie.

Dans les systèmes de conversion de ce type (Fig.1 Art Antérieur), le nombre de colonnes bobinées de chaque coupleur magnétique 6A, 6B, 6C est égal au nombre d'onduleurs 2A, 2B, 2C en parallèle.

Toutefois, les systèmes de conversion de ce type ne sont pas modulaires, puisque l'ajout d'un onduleur, en parallèle des autres onduleurs déjà présents, nécessite d'ajouter un noyau magnétique muni d'une bobine de couplage dans chaque coupleur magnétique. En outre, les systèmes de conversion de ce type engendrent des chutes de tension de ligne relativement importantes.

L'invention a pour but de proposer un système de conversion modulaire, afin de faciliter l'ajout d'un onduleur en parallèle, et permettant d'obtenir une plus faible inductance de mode commun entre les phases des différents onduleurs, afin de réduire les chutes de tension de ligne engendrées.

A cet effet, l'invention a pour objet un système de conversion du type précité, **caractérisé en ce qu'**il comprend N x M deuxièmes bobines électromagnétiques de couplage, chacune étant reliée par une de ses extrémités à l'autre extrémité d'une première bobine de couplage respective et enroulée autour d'un noyau distinct de celui de la première bobine respective, en ce qu'une première bobine de couplage et une deuxième bobine de couplage sont enroulées autour de chaque noyau, en ce que les première et deuxième bobines d'un même noyau correspondent à une même phase de chaque courant alternatif intermédiaire, et en ce que les premières, respectivement les deuxièmes, bobines électromagnétiques sont destinées à être parcourues par un courant respectif de mode commun, et agencées de telle sorte que, pour chaque noyau magnétique, le flux de mode commun généré par la première bobine est de sens opposé au flux de mode commun généré par la deuxième bobine, chaque borne de sortie du système étant reliée aux autres extrémités des M deuxièmes bobines correspondant à une même phase des courants alternatifs intermédiaires.

Une première bobine de couplage, à travers laquelle circule un courant intermédiaire, est enroulée autour d'un noyau et reliée à une deuxième bobine de couplage enroulée autour d'un autre noyau. L'autre noyau comporte également une autre première bobine, à travers laquelle circule un autre courant intermédiaire, de sorte que les flux de mode commun respectifs de chaque bobine de cet autre noyau interagissent entre eux. L'autre première bobine et la deuxième bobine, enroulées autour l'autre noyau, correspondent à une même phase de chaque courant alternatif intermédiaire, de sorte que les flux de mode commun respectifs de chaque bobine sont en phase.

L'association des premières et deuxièmes bobines électromagnétiques de couplage pour chaque phase du courant de sortie permet ainsi de réduire le courant de mode commun entre les différentes phases du courant de sortie. En effet, les flux de mode commun générés respectivement par la première bobine et par la deuxième bobine d'un même noyau sont en phase et de sens opposés, de sorte qu'ils s'annulent partiellement. Les chutes de tension de ligne en mode commun sont donc fortement réduites. En outre, cette réduction des chutes de tension de ligne est obtenue sans augmenter l'inductance, et donc l'encombrement, des premières et deuxièmes bobines de couplage.

Les composants magnétiques du système de conversion selon l'invention permettent d'obtenir à la fois une faible inductance de mode commun (chute de tension faible) et une forte inductance de mode différentielle (inductance limitant les courants de circulation).

Une comparaison avec un système de conversion classique, pour un même nombre de spires, une même taille des conducteurs et une même section de chaque noyau, montre que le système de conversion selon l'invention permet de réduire les chutes de tension de ligne engendrées.

Suivant d'autres modes de réalisation, le système de conversion comprend une ou plusieurs des caractéristiques suivantes, prises isolément ou suivant toutes les combinaisons techniquement possibles :

- les premières, respectivement les deuxièmes, bobines électromagnétiques sont toutes enroulées dans un même sens respectif autour de leur noyau ;
- les premières bobines et les deuxièmes bobines sont toutes identiques et ont un même nombre de spires.

Lorsque la première bobine et la deuxième bobine d'un même noyau magnétique sont en outre identiques et ont un même nombre de spires, les flux de mode commun générés respectivement par la première bobine et par la deuxième bobine sont sensiblement égaux en valeur absolue, et s'annulent sensiblement totalement, puisqu'ils sont en phase et de sens opposés. Les chutes de tension de ligne en mode commun sont donc réduites de manière encore plus importante.

- les noyaux magnétiques sont tous identiques et ont une même valeur de réluctance ;
- le système comprend, pour chaque onduleur, un coupleur magnétique comportant les M noyaux magnétiques associés à un onduleur respectif, et équipés des M premières bobines de couplage et des M deuxièmes bobines de couplage, et les M noyaux magnétiques de chaque coupleur magnétique sont reliés entre eux par des barreaux magnétiques de liaison ;
- le système comporte N bus distincts de circulation d'un courant continu d'entrée, chaque bus étant associé à un onduleur respectif ;
- le système comprend un unique bus de circulation du courant continu d'entrée, commun aux N onduleurs polyphasés ;
- chaque coupleur magnétique comporte en outre au moins une colonne magnétique de retour reliée par les barreaux magnétiques de liaison aux M noyaux magnétiques du coupleur.

L'ajout d'une colonne magnétique de retour à chaque coupleur magnétique permet de réduire le courant homopolaire pour chaque phase du courant de sortie. Ceci est réalisable à la fois dans le cas d'un unique bus d'entrée commun à tous les onduleurs, et dans le cas d'un bus d'entrée distinct pour chaque onduleur. Toutefois, dans le cas d'un bus d'entrée distinct pour chaque onduleur, il sera plus avantageux pour des raisons de coût et d'encombrement, de connecter une résistance de ligne de valeur élevée entre le point milieu capacitif de chaque bus et la masse électrique.

Les composants magnétiques du système de conversion selon l'invention permettent ainsi d'obtenir une inductance (impédance) homopolaire de valeur élevée, afin de réduire les courants de mode homopolaire.

- chaque deuxième bobine électromagnétique de couplage d'un coupleur magnétique est reliée à la première bobine électromagnétique de couplage correspondante du coupleur magnétique suivant, chaque deuxième bobine électromagnétique de couplage du dernier coupleur magnétique étant reliée à la première bobine électromagnétique de couplage correspondante du premier coupleur magnétique ;
- les première et deuxième bobines électromagnétiques correspondant à un même noyau sont enroulées de manière concentrique autour dudit noyau ;
- les première et deuxième bobines électromagnétiques enroulées autour d'un même noyau sont disposées de manière successive le long dudit noyau.

L'invention a également pour objet un module de conversion du type précité, **caractérisé en ce qu'**il comprend :

- un unique onduleur polyphasé propre à être relié, via les deux bornes d'entrée, à un bus de circulation d'un courant électrique continu d'entrée, et à convertir le courant continu d'entrée en un courant alternatif intermédiaire comportant M phases et délivré en M bornes intermédiaires, chaque borne intermédiaire correspondant à une phase du courant intermédiaire ;
- M premières bobines électromagnétiques de couplage, chacune étant reliée par une de ses extrémités à une borne respective des M bornes intermédiaires de l'onduleur polyphasé, et par l'autre de ses extrémités à une première borne de couplage ;
- M deuxièmes bobines électromagnétiques de couplage, chacune étant reliée par une de ses extrémités à une borne respective des M bornes de sortie, et par l'autre de ses extrémités à une deuxième borne de couplage ;
- M noyaux magnétiques, une première bobine de couplage et une deuxième bobine de couplage étant enroulées autour de chaque noyau respectif.

Suivant d'autres modes de réalisation, le module de conversion comprend une ou plusieurs des caractéristiques suivantes, prises isolément ou suivant toutes les combinaisons techniquement possibles :

- les M noyaux magnétiques sont reliés entre eux par des barreaux magnétiques de liaison ;
- le module comporte en outre au moins une colonne magnétique de retour reliée par les barreaux magnétiques de liaison aux M noyaux magnétiques ;
- le module comporte une armoire de protection dans laquelle sont agencés l'onduleur polyphasé et les M noyaux magnétiques équipés chacun d'une première bobine électromagnétique de couplage et d'une deuxième bobine électromagnétique de couplage respectives, et les deux bornes d'entrée, les M bornes de sortie, les M premières bornes de couplage et les M deuxièmes bornes de couplage sont fixées à l'armoire et accessibles depuis l'extérieur de l'armoire.

L'invention a également pour objet un système de conversion d'au moins un courant électrique continu d'entrée en un courant électrique alternatif de sortie comportant une pluralité M de phases et délivré en M bornes de sortie, chaque borne de sortie correspondant à une phase du courant de sortie, **caractérisé en ce qu'**il comporte pluralité N de modules de conversion tels que définis ci-dessus, en ce que les N modules de conversion sont connectés en parallèle les uns des autres, les N bornes de sortie de chaque module respectif qui correspondent à une même phase du courant de sortie étant reliées entre elles, et en ce chaque première borne de couplage d'un module de conversion est reliée à une deuxième borne de couplage d'un autre module de conversion par un câble électrique, de sorte que les première et deuxième bobines de couplage associées correspondent à une même phase de chaque courant alternatif intermédiaire, et en ce que les premières, respectivement les deuxièmes, bobines électromagnétiques sont destinées à être parcourues par un courant respectif de mode commun, et agencées de telle sorte que, pour chaque noyau magnétique, le flux de mode commun généré par la première bobine est de sens opposé au flux de mode commun généré par la deuxième bobine.

L'invention a également pour objet un équipement électrique de puissance, **caractérisé en ce qu'**il comporte au moins un système de conversion tel que défini ci-dessus.

L'invention et ses avantages apparaîtront plus clairement à la lecture de la description qui va suivre, donnée uniquement à titre d'exemple, et faite en référence aux dessins annexés, sur lesquels :

- la figure 1 déjà décrite est un schéma d'un système de conversion de type connu,
- la figure 2 est un schéma d'un système de conversion équipé de trois modules de conversion selon un premier mode de réalisation de l'invention,

- la figure 3 est un schéma électrique d'un circuit équivalent en mode différentiel des premières phases d'onduleurs triphasés en parallèle du système de conversion de la figure 2,
- la figure 4 est un schéma électrique analogue à celui de la figure 3 en mode commun,
- la figure 5 est un schéma électrique d'un circuit équivalent en mode homopolaire du système de conversion de la figure 2,
- la figure 6 est un schéma analogue à celui de la figure 2 selon un deuxième mode de réalisation de l'invention, et
- la figure 7 est un schéma électrique analogue à celui de la figure 5 selon le deuxième mode de réalisation de l'invention.

Il est rappelé que, dans la suite de la description, deux points repérés par une lettre identique sur une figure sont, par convention, reliés entre eux par une liaison électrique non représentée, afin d'améliorer la lisibilité des schémas.

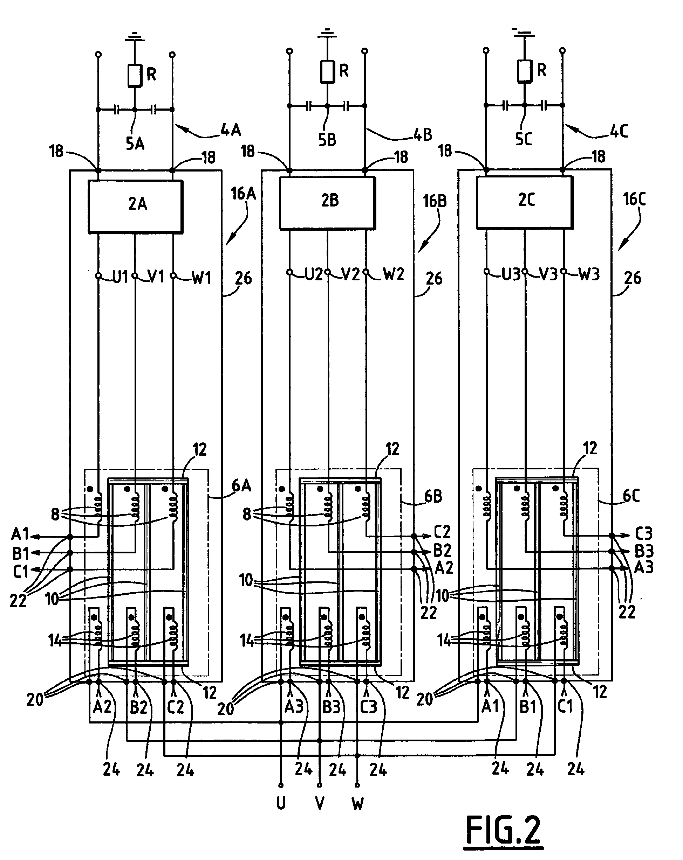

Si l'on se réfère à la figure 2, on voit que le système de conversion de l'invention comprend en premier lieu les mêmes composants que ceux de la figure 1, à savoir trois onduleurs triphasés 2A, 2B, 2C disposés en parallèle les uns des autres, trois coupleurs magnétiques 6A, 6B, 6C comportant chacun trois premières bobines électromagnétiques de couplage 8. Chaque première bobine électromagnétique de couplage 8 est enroulée autour d'un noyau 10 respectif, des noyaux 10 d'un même coupleur magnétique 6A, 6B, 6C étant reliés entre eux par des barreaux magnétiques de liaison 12.

Dans l'exemple de réalisation de la figure 2, les noyaux 10 et les barreaux magnétiques de liaison 12 d'un même coupleur magnétique 6A, 6B, 6C sont sensiblement coplanaires. Les noyaux 10 sont sensiblement parallèles entre eux, et les barreaux magnétiques de liaison 12 sont sensiblement perpendiculaires aux noyaux 10.

On voit également sur la figure 2 que chaque onduleur triphasé 2A, 2B, 2C est relié à un bus 4A, 4B, 4C respectif de circulation d'un courant électrique continu d'entrée. Les trois bus d'entrée 4A, 4B, 4C sont distincts les uns des autres. Chaque bus d'entrée comporte un point milieu capacitif 5A, 5B, 5C relié par l'intermédiaire d'une résistance de ligne R à la masse électrique. La résistance de ligne R est, par exemple, identique et de valeur élevée pour chacun des bus d'entrée 4A, 4B, 4C.

Chaque onduleur triphasé 2A, 2B, 2C est propre à convertir le courant continu d'entrée circulant sur son bus d'entrée 4A, 4B, 4C associé, en un courant triphasé intermédiaire délivré en trois bornes intermédiaires. Les bornes intermédiaires en sortie d'un premier onduleur triphasé 2A sont U1, V1 et W1. De même, les trois bornes intermédiaires en sortie d'un deuxième onduleur triphasé 2B, respectivement en sortie d'un troisième onduleur triphasé 2C, sont U2, V2 et W2, respectivement U3, V3 et W3.

Chacune des premières bobines de couplage 8 d'un premier coupleur magnétique 6A est reliée par une de ses extrémités à une borne intermédiaire U1, V1, W1 respective du premier onduleur triphasé 2A. De même, chacune des trois bobines de couplage 8 du deuxième coupleur magnétique 6B est reliée par une de ses extrémités à une borne intermédiaire U2, V2, W2 respectives d'un deuxième onduleur triphasé 2B. De même, chacune des trois bobines de couplage 8 d'un troisième et dernier coupleur magnétique 6C est reliée par une de ses extrémités à une borne intermédiaire U3, V3, W3 respective du troisième onduleur triphasé 2C.

On voit également sur la figure 2 que le système de conversion de l'invention comprend en outre, pour chaque coupleur magnétique 6A, 6B, 6C, trois deuxièmes bobines électromagnétiques de couplage 14 enroulées autour d'un noyau magnétique 10 respectif. Les deuxièmes bobines de couplage 14 sont toutes identiques aux premières bobines de couplage 8.

Sur la figure 2, le système de conversion de l'invention comprend en outre trois modules 16A, 16B, 16C de conversion d'un courant continu d'entrée en un courant triphasé de sortie. Un premier module 16A comporte le premier onduleur 2A et le premier coupleur magnétique 6A associé. De même, un deuxième module 16B comporte le deuxième onduleur 2B et le deuxième coupleur magnétique 6B associé, et un troisième module 16C comporte le troisième onduleur 2C et le troisième coupleur magnétique 6C associé.

Chaque module 16A, 16B, 16C comporte deux bornes d'entrée 18, trois bornes de sortie 20, trois premières bornes de couplage 22 et trois deuxièmes bornes de couplage 24. Chacune des trois bornes de sortie 20 correspond à une phase respective du courant de sortie.

Plus précisément, chaque module 16A, 16B, 16C comporte une armoire de protection 26 dans laquelle sont agencés l'onduleur polyphasé 2A, 2B, 2C et le coupleur magnétique 6A, 6B, 6C associé. Les deux bornes d'entrée 18, les 3 bornes de sortie 20, les 3 premières bornes de couplage 22 et les 3 deuxièmes bornes de couplage 24 sont fixées à l'armoire 26 et accessibles depuis l'extérieur de l'armoire.

Chaque première bobine de couplage 8 est reliée par l'autre de ses extrémités à une première borne de couplage 22 respective. Chaque deuxième bobine de couplage 14 est reliée par une de ses extrémités à une borne de sortie 20 respective, et par l'autre de ses extrémités à une deuxième borne de couplage 24 respective.

Chaque première borne de couplage 22 d'un module de conversion 16A, 16B, 16C est destinée à être reliée à une deuxième borne de couplage 24 d'un autre module de conversion 16A, 16B, 16C par un câble électrique non représenté, de sorte que les première et deuxième bobines de couplage associées 8, 14 correspondent à une même phase de chaque courant alternatif intermédiaire.

Plus précisément, chaque deuxième bobine électromagnétique de couplage 14 du premier coupleur magnétique 6A est reliée par une de ses extrémités à l'autre extrémité d'une première bobine de couplage 8 respective du deuxième coupleur magnétique 6B, comme indiqué par les points de liaison A2, B2, C2. De même, chaque deuxième bobine de couplage 14 du deuxième coupleur magnétique 6B est reliée par une de ses extrémités à l'autre extrémité d'une première bobine de couplage 8 respective du troisième coupleur magnétique 6C, comme indiqué par les points de liaison A3, B3, C3. De même, chaque deuxième bobine de couplage 14 du troisième coupleur magnétique 6C est reliée par une de ses extrémités à l'autre extrémité d'une première bobine de couplage 8 respective du premier coupleur magnétique 6A, comme indiqué par les points de liaison A1, B1, C1.

Chaque deuxième bobine de couplage 14 est ainsi enroulée autour d'un noyau magnétique 10 distinct de celui de la première bobine de couplage 8, à laquelle elle est reliée. Le noyau de la première bobine de couplage 8 et le noyau de la deuxième bobine de couplage 14 correspondent à une même phase de chaque courant triphasé intermédiaire.

Le système de conversion comporte trois bornes de sortie U, V et W, destinées à délivrer chacune une phase du courant triphasé de sortie. Chaque borne de sortie U, V, W est reliée aux bornes de sortie 20 respectives de chaque module de conversion qui correspondent à une même phase des courants alternatifs intermédiaires.

Pour chaque noyau 10, la première bobine de couplage 8 et la deuxième bobine de couplage 14 correspondent à une même phase du courant triphasé de sortie. Autrement dit, les courants destinés à parcourir respectivement la première bobine 8 et la deuxième bobine 14 d'un même noyau 10 sont en phase.

Les premières bobines de couplage 8 sont toutes enroulées dans un même premier sens, et les deuxièmes bobines de couplage 14 sont toutes enroulées dans un même deuxième sens. Dans l'exemple de réalisation de la figure 2, le premier sens et le deuxième sens sont identiques.

Les premières bobines 8 et les deuxièmes bobines 14 sont agencées de telle sorte que les flux respectifs sur chaque noyau 10, destinés à être engendrés par les courants propres à parcourir les bobines 8, 14, sont de sens opposés, comme indiqué par les points représentés à proximité des bobines 8, 14.

Dans l'exemple de réalisation de la figure 2, les première et deuxième bobines électromagnétiques 8, 14 enroulées autour d'un même noyau 10 sont disposées de manière successive le long dudit noyau 10.

Le fonctionnement du système de conversion va être à présent décrit à l'aide des figures 2 à 5.

Les coupleurs magnétiques 6A, 6B, 6C sont caractérisés par trois paramètres électriques, à savoir une inductance de mode différentiel, une inductance de mode commun et une inductance de mode homopolaire.

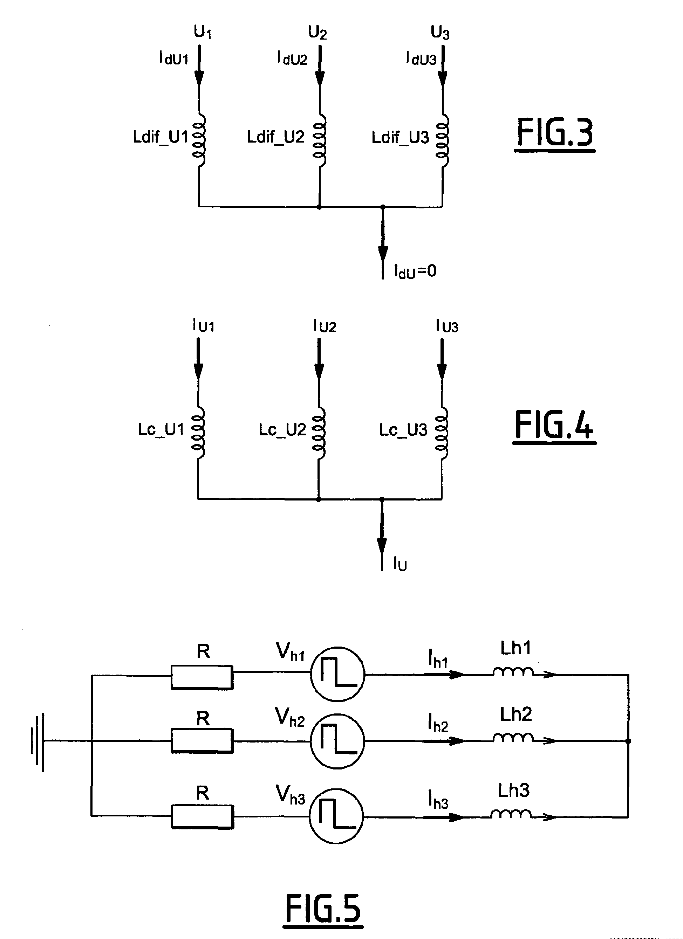

L'inductance de mode différentiel permet de limiter les courants propres à circuler entre une même phase des différents onduleurs 2A, 2B, 2C en parallèle les uns des autres. Les inductances de mode différentiel Ldif_U1, Ldif_U2 et Ldif_U3, visibles sur la figure 3, permettent, par exemple, de limiter les courants propres à circuler entre les phases correspondants aux bornes intermédiaires U1, U2 et U3.

En effet, pour le premier noyau magnétique 10 du premier coupleur magnétique 6A, la première bobine de couplage 8 est parcourue par un courant $I_{U1}$, et la deuxième bobine de couplage 14 est parcourue par un courant $I_{U2}$ correspondant à la première phase du deuxième onduleur 2B. Toute différence instantanée $I_{dU1}$ entre le courant $I_{U1}$ et $I_{U2}$, créé un flux magnétique $\Phi_{dU1}$ dans cette colonne.

$$I_{dU1} = I_{U1} - I_{U2} \qquad (I)$$

$$\Phi_{dU1} \quad = \frac{2xNbS}{R_{noyau}} \times I_{dU1} \qquad (II)$$

où NbS représentent le nombre de spires d'une bobine de couplage 8, 14, et $R_{noyau}$ représente la réluctance totale d'un noyau magnétique 10.

L'équation du flux $\Phi_{dU1}$ peut également s'écrire sous la forme :

$$\Phi_{dU1} = \frac{Ldif\_U1}{2xNbS} \times I_{dU1} \qquad (III)$$

De manière analogue, pour le premier noyau magnétique 10 du deuxième coupleur magnétique 6B, la première bobine de couplage 8 est parcourue par le courant $I_{U2}$, et la deuxième bobine de couplage 14 est parcourue par un courant $I_{U3}$. Une différence instantanée $I_{dU2}$ entre les courants $I_{U2}$ et $I_{U3}$ s'écrit alors sous la forme :

$$I_{dU2} = I_{U2} - I_{U3} \qquad (IV)$$

et le flux magnétique $\Phi_{dU2}$ créé dans ce noyau magnétique 10 s'écrit sous la forme :

$$\Phi_{dU2} = \frac{Ldif\_U2}{2xNbS} \times I_{dU2} = \frac{2xNbS}{R_{noyau}} \times I_{dU2} \quad (V)$$

De manière analogue encore, pour le premier noyau magnétique 10 du troisième coupleur magnétique 6C, la première bobine de couplage 8 est parcourue par le courant $I_{U3}$ et la deuxième bobine de couplage 14 est parcourue par le courant $I_{U1}$. Une différence instantanée $I_{dU3}$ entre les courants $I_{U3\ et}$ $I_{U1}$ s'écrit sous la forme :

$$I_{dU3} = I_{U3} - I_{U1} \qquad (VI)$$

et le flux magnétique $\Phi_{dU3}$ créé dans ce première noyau magnétique 10 du troisième coupleur 6C s'écrit sous la forme :

$$\Phi_{dU3} = \frac{Ldif\_U3}{2xNbS} \times I_{dU3} = \frac{2xNbS}{R_{noyau}} \times I_{dU3} \quad (VII)$$

Les inductances de mode différentiel Ldif_U1, Ldif_U2 et Ldif_U3 se déduisent des équations (II), (III), (V) et (VII) et s'écrivent sous la forme :

$$Ldif\_U1 = Ldif\_U2 = Ldif\_U3 = \frac{(2xNbS)^2}{R_{noyau}} \qquad (VIII)$$

Les inductances de mode différentiel Ldif_V1, Ldif_V2 et Ldif_V3, respectivement Ldif_W1, Ldif_W2 et Ldif_W3, correspondant respectivement aux deuxième et troisième noyau magnétique de chacun des coupleurs magnétiques 6A, 6B, 6C, ainsi que les flux magnétiques correspondants créés dans ces noyaux magnétiques 10, sont déterminés de manière analogue. Les inductances de mode différentiel Ldif_V1, Ldif_V2 et Ldif_V3, respectivement Ldif_W1, Ldif_W2 et Ldif_W3 s'écrivent sous la forme :

$$Ldif\_V1 = Ldif\_V2 = Ldif\_V3 = Ldif\_W1 = Ldif\_W2 = Ldif\_W3 = \frac{(2xNbS)^2}{R_{noyau}} \quad (IX)$$

On constate à cet effet que les inductances de mode différentiel sont principalement déterminées par la réluctance totale $R_{noyau}$ d'un noyau magnétique 10 bobiné.

Dans l'exemple de réalisation des figures 2 et 3, toutes les inductances de mode différentiel sont égales, car toutes les bobines 8, 14 ont un même nombre NbS de spires et tous les noyaux magnétiques 10 sont identiques et ont une même réluctance totale $R_{noyau}$.

Afin d'obtenir les meilleures performances électriques, chaque inductance de mode différentiel sera choisie avec une valeur aussi grande que possible, tout en recherchant un compromis entre les performances électriques et l'encombrement de chaque coupleur magnétique 6A, 6B, 6C.

On notera que la somme $I_{dU}$ des différences instantanées $I_{dU1}$, $I_{dU2}$ et $I_{dU3}$ est nulle d'après les équations (I), (IV) et (VI) :

$$I_{dU} = I_{dU1} + I_{dU2} + I_{dU3} = 0 \quad (X)$$

Sur la figure 4 illustrant un circuit équivalent en mode commun pour les phases correspondant aux bornes U1, U2 et U3, des inductances de mode commun Lc_U1, Lc_U2 et Lc_U3 sont propres à réduire les ondulations de courant à trois fois la fréquence de découpage. Dans un cas plus général où N onduleurs sont disposés en parallèle les uns des autres, les inductances de mode commun Lc_U1 à Lc_UN sont propres à réduire les ondulations du courant à N fois la fréquence de découpage.

De manière analogue, des inductances de mode commun Lc_V1, Lc_V2 et Lc_V3, respectivement Lc_W1, Lc_W2 et Lc_W3, sont propres à réduire les ondulations des courants circulant dans les bornes V1, V2 et V3, respectivement W1, W2 et W3.

Chaque inductance de mode commun Lc_U1 à Lc_U3, Lc_V1 à Lc_V3 et Lc_W1 à Lc_W3 est principalement déterminée par des flux de fuite associés à chaque bobine de couplage 8, 14 respectives du coupleur magnétique 6A, 6B, 6C correspondant.

La première bobine 8 et la deuxième bobine 14 d'un même noyau 10 sont parcourues par une même phase des courants intermédiaires respectifs. La première bobine 8 et la deuxième bobine 14 d'un même noyau 10 sont en outre agencées de telle sorte le flux de fuite engendré par la première bobine 8 parcourue par un premier courant de mode commun est de sens opposé au flux de fuite engendré par la deuxième bobine 14 parcourue par un deuxième courant de mode commun. Les bobines 8, 14 étant identiques et les courants de mode commun étant d'intensités sensiblement égales, les flux de fuite engendrés par la première bobine 8 et par la deuxième bobine 14 sont sensiblement égaux en valeur absolue. Les flux de fuite engendrés par la première bobine 8 et par la deuxième bobine 14 sont donc en phase, de sens opposés et sensiblement égaux en valeur absolue, de sorte qu'ils s'annulent sensiblement totalement.

Les inductances de mode commun Lc_U1 à Lc_U3, Lc_V1 à Lc_V3 et Lc_W1 à Lc_W3 ont donc de faibles valeurs, et la chute de tension aux bornes de la charge, non représentée et connectée aux bornes U, V et W du système de conversion, est ainsi fortement réduite.

Sur la figure 5 illustrant un circuit équivalent en mode homopolaire du système de conversion, des inductances homopolaires Lh1, Lh2 et Lh3 sont propres à réduire des courants homopolaires $I_{h1}$, $I_{h2}$ et $I_{h3}$ respectifs. En mode homopolaire, le premier onduleur 2A, respectivement le deuxième onduleur 2B, respectivement le troisième onduleur 2C, est représentable par un générateur de tension homopolaire délivrant une tension Vh1, respectivement Vh2, respectivement Vh3. Chaque tension homopolaire d'un onduleur 2A, 2B, 2C est alors définie par la formule suivante :

$$V_{hj} = \frac{V_{Uj} + V_{Vj} + V_{Wj}}{3} , \text{j} = 1, 2 \text{ ou } 3 \quad (XI)$$

où j est égal à respectivement 1, 2, 3, et $V_{Uj}$ est la tension de phase correspondant à la borne intermédiaire Uj, $V_{Vj}$ la tension de phase correspondant à la borne intermédiaire Vj et $V_{Wj}$ la tension de phase correspondant à la borne intermédiaire Wj.

La résistance de ligne R étant connectée pour chaque bus 4A, 4B, 4C respectif en son point milieu capacitif 5A, 5B, 5C et la masse électrique, en amont de chaque onduleur 2A, 2B, 2C, le circuit équivalent en mode homopolaire comporte cette résistance R pour chaque ligne correspondant à un onduleur 2A, 2B, 2C respectif, et en amont de chaque générateur de tension homopolaire.

Chaque inductance de mode homopolaire Lh1, Lh2, Lh3 dépend de la réluctance de l'air à l'extérieur du noyau magnétique 10 correspondant. Cette réluctance étant très grande, les inductances de mode homopolaire Lh1, Lh2 et Lh3 ont des faibles valeurs.

Chaque résistance de ligne R ayant une valeur très élevée, les courants homopolaires $I_{h1}$, $I_{h2}$ et $I_{h3}$ ont donc une faible valeur, bien que les inductances de mode homopolaire Lh1, Lh2 et Lh3 soient de faible valeur.

Ainsi, l'association particulière, décrite précédemment, des premières et deuxièmes bobines électromagnétiques de couplage 8, 14 pour chaque phase du courant triphasé de sortie permet de réduire le courant de mode commun propre à circuler entre les phases des différents onduleurs, tout en réduisant la valeur de l'inductance des bobines électromagnétiques de couplage 8, 14, afin de réduire les chutes de tension de ligne engendrées. Les courants de mode homopolaire circulant dans le système de conversion ont également de faibles valeurs, de par la présence d'une résistance de ligne R de valeur élevée pour chaque bus d'entrée 4A, 4B, 4C. La valeur d'inductance choisie pour les bobines électromagnétiques de couplage 8, 14 permet d'obtenir un courant de mode différentiel limité entre les différentes phases. Le système de conversion selon l'invention permet ainsi d'obtenir de très bonnes performances électriques.

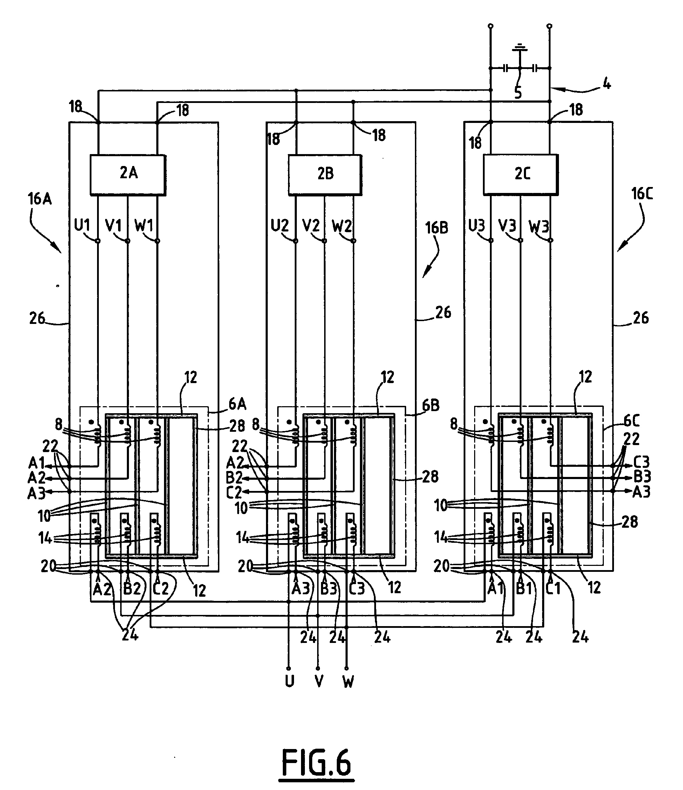

La figure 6 illustre un deuxième mode de réalisation de l'invention pour lequel les éléments analogues au premier mode de réalisation, décrits précédemment, sont repérés par des références identiques, et ne sont donc pas décrits à nouveau.

Selon le deuxième mode de réalisation, les trois onduleurs triphasés 2A, 2B et 2C sont connectés à un unique bus 4 de circulation du courant d'entrée. Autrement dit, les onduleurs triphasés 2A, 2B, 2C sont connectés en parallèle du bus commun d'entrée 4. Le bus d'entrée 4 comporte un point milieu capacitif 5 relié à la masse électrique.

On voit sur la figure 6 que chaque coupleur magnétique 6A, 6B, 6C comprend en outre, selon le deuxième mode de réalisation de l'invention, une colonne magnétique de retour 28 relié par les barreaux magnétiques de liaison 12 aux trois noyaux magnétiques 10 correspondants. La colonne magnétique de retour 28 est destinée à réduire le courant homopolaire pour chaque phase respective du courant de sortie. Chaque coupleur magnétique 6A, 6B, 6C ne comporte pas de bobinage enroulé autour de la colonne magnétique de retour 28 respective.

Dans l'exemple de réalisation de la figure 6, les noyaux 10, les barreaux magnétiques de liaison 12 et la colonne magnétique de retour 28 d'un même coupleur magnétique 6A, 6B, 6C sont sensiblement coplanaires. Les noyaux 10 et la colonne magnétique de retour 28 sont sensiblement parallèles entre eux, et les barreaux magnétiques de liaison 12 sont sensiblement perpendiculaires aux noyaux 10 et à la colonne magnétique de retour 28.

Le fonctionnement de ce deuxième mode de réalisation est similaire à celui du premier mode de réalisation. En particulier, le fonctionnement en mode différentiel et le fonctionnement en mode commun du deuxième mode de réalisation sont identiques à celui du premier mode de réalisation et ne sont donc pas décrits à nouveau.

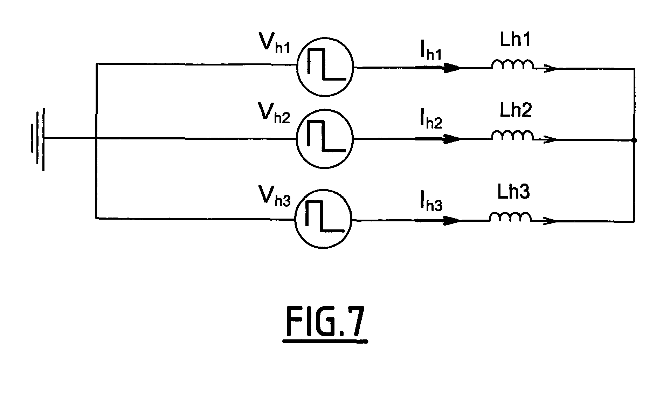

Le fonctionnement en mode homopolaire de ce deuxième mode de réalisation va être à présent décrit à l'aide de la figure 7.

On voit sur la figure 7, que le circuit équivalent en mode homopolaire du système de conversion selon le deuxième mode de réalisation ne comporte pas de résistance de ligne pour chaque onduleur triphasé, 2A, 2B, 2C. En effet, les onduleurs triphasés 2A, 2B, 2C sont tous connectés en parallèle au même bus d'entrée 4, dont le point milieu capacitif 5 est directement relié à la masse électrique. Dans l'exemple de réalisation de la figure 6, chaque onduleur triphasé 2A, 2B, 2C ne peut pas être équipé d'une résistance de ligne distincte en amont de son entrée. Il est alors nécessaire que les inductances de mode homopolaire Lh1, Lh2 et Lh3 aient des valeurs élevées, afin que chaque courant homopolaire $I_{h1}$, $I_{h2}$ et $I_{h3}$ respectif ait une faible valeur.

L'ajout d'un noyau magnétique de retour 16 dans chacun des coupleurs magnétiques 6A, 6B, 6C selon le deuxième mode de réalisation de l'invention permet d'obtenir des inductances homopolaires Lh1, Lh2 et Lh3 de valeurs importantes. En effet, le flux magnétique $\Phi_{Rj}$ circulant à travers le noyau de retour 16 du j$^{\text{ème}}$ coupleur magnétique s'écrit sous la forme :

$$\Phi_{Rj} = \frac{(2xNbS)xI_{hj}}{3x(3xR_{retour} + R_{noyau})} \quad \text{(XII)}$$

où j varie respectivement de 1 à 3, $R_{retour}$ représente la réluctance totale de la colonne magnétique de retour 28. Le flux $\Phi_{Rj}$ peut également s'écrire sous la forme :

$$\Phi_{Rj} = \frac{L_{hj}}{2xNbS} \times I_{hj} \quad \text{(XIII)}$$

L'inductance de mode homopolaire Lhj se déduit des équations (XII) et (XIII), et s'écrit sous la forme :

$$L_{hj} = \frac{(2xNbS)^2}{3x(3xR_{retour} + R_{noyau})} \quad \text{(XIV)}$$

L'ajout d'un telle colonne magnétique de retour 28 permet donc de contrôler la valeur de l'inductance homopolaire Lhj par l'intermédiaire du flux magnétique $\Phi_{Rj}$ circulant à travers la colonne de retour 28. L'inductance homopolaire Lhj dépend de la réluctance totale $R_{retour}$ de la colonne magnétique de retour 28 et de la réluctance totale $R_{noyau}$ de chaque noyau magnétique 10 bobiné.

La colonne magnétique de retour 28 et chaque noyau magnétique 10 bobiné sont choisis avec une faible valeur de réluctance totale $R_{retour}$, $R_{noyau}$ respective, permettant d'obtenir une valeur élevée pour l'inductance homopolaire Lhj, ce qui entraîne ainsi un faible courant homopolaire $I_{nj}$.

Les avantages de ce deuxième mode de réalisation sont identiques à ceux du premier mode de réalisation et ne sont donc pas décrits à nouveau.

En variante, les première et deuxième bobines électromagnétiques 8, 14 correspondant à un même noyau 10 sont enroulées de manière concentrique autour dudit noyau magnétique 10.

En variante, les premières et les deuxièmes bobines électromagnétiques 8, 14 sont différentes et ont des nombres distincts de spires.

En variante, chaque coupleur magnétique 6A, 6B, 6C comporte au moins deux colonnes magnétiques de retour 28. Les colonnes magnétiques de retour 28 sont, par exemple, agencées symétriquement, de part et d'autre des noyaux magnétiques 10 du coupleur.

En variante, chaque bus d'entrée 4A, 4B, 4C a une résistance de ligne $R_A$, $R_B$, $R_C$, les résistances $R_A$, $R_B$, $R_C$ étant de valeurs respectives distinctes.

En variante, les noyaux 10 sont répartis sur la circonférence d'un cylindre fictif, l'angle au centre entre deux noyaux 10 successifs étant égal à $2 \times \pi / M$, où M est le nombre de noyaux 10 de chaque coupleur magnétique. Chaque noyau présente une extrémité supérieure et une extrémité inférieure. Les extrémités supérieures des noyaux 10 sont reliées entre elles via des barreaux magnétiques de liaison 12 supérieurs, et les extrémités inférieures des noyaux 10 sont reliées entre elles via des barreaux magnétiques de liaison 12 inférieurs. Chaque barreau de liaison présente une extrémité de liaison avec un noyau 10, et une extrémité distante dudit noyau 10. Chaque extrémité distante des barreaux de liaison 12 est usinée en forme de pointe, l'angle au sommet de la pointe étant égal à $2 \times \pi / M$ degrés. Chaque extrémité distante d'un barreau de liaison 12 supérieur, respectivement inférieur, est fixée aux (M-1) autres extrémités distantes des barreaux de liaison 12 supérieurs, respectivement inférieurs. La réunion des barreaux magnétiques de liaison 12 supérieurs, respectivement inférieurs, est sensiblement coplanaire, et en forme d'une étoile. Comme dans les modes de réalisation précédents, les bobines 8, 14 sont enroulées autour des noyaux 10.

Lorsque le coupleur magnétique 6A, 6B, 6C comporte une colonne magnétique de retour 28, la colonne magnétique de retour 28 est disposée sensiblement parallèlement aux noyaux 10. Plus précisément, la colonne de retour 28 relie l'union des extrémités distantes des barreaux de liaison 12 supérieurs à l'union des extrémités distantes des barreaux de liaison 12 inférieurs. La colonne de retour 28 présente un entrefer dans sa partie centrale, et comporte un élément supérieur et un élément inférieur, séparés par l'entrefer et sensiblement identiques. La colonne de retour 28 ne comporte pas de bobinage.

L'homme du métier comprendra que l'invention, décrite dans les modes de réalisation précédents pour trois onduleurs triphasés, s'applique plus généralement à N onduleurs polyphasés, connectés en parallèle les uns des autres et destinés à convertir le courant continu d'entrée en un courant alternatif intermédiaire comportant M phases. Dans ce cas, le système de conversion comporte N modules de conversion, comprenant chacun un onduleur polyphasé et un coupleur magnétiques associé. Chacun des N modules de conversion comporte deux bornes d'entrée 18, M bornes de sortie 20, M premières bornes de couplage 22 et M deuxièmes bornes de couplage 24. Chacun des N coupleurs magnétiques comporte M premières bobines de couplage 8, M deuxièmes bobines de couplage 14 et M noyaux magnétiques 10. Autour de chacun des M noyaux magnétiques 10 d'un coupleur magnétique sont enroulées de manière concentrique, ou bien de manière successive, une première bobine de couplage 8 et une deuxième bobine de couplage 14 correspondante. Dans le cas où les N onduleurs polyphasés sont connectés à un unique bus commun 4 de circulation du courant continu d'entrée, chacun des N coupleurs magnétiques comprend au moins une colonne de retour 28.

L'homme du métier comprendra que l'invention s'applique plus généralement à toute forme de permutation permettant de connecter une deuxième bobine d'un coupleur magnétique à la première bobine d'un autre coupleur magnétique, la première et la deuxième bobine correspondant à une même phase du courant polyphasé de sortie. L'invention ne se limite donc pas à la connexion sous forme de permutation circulaire utilisée pour relier les premières bobines et deuxièmes bobines des exemples de réalisation des figures 2 et 6.

L'homme du métier comprendra enfin que le système de conversion selon l'invention est particulièrement modulaire. En effet, dans le cas, par exemple, d'un besoin de puissance électrique supplémentaire, il suffit d'ajouter un ou plusieurs modules de conversion au système de conversion selon l'invention préalablement mis en oeuvre. L'ajout d'un module supplémentaire se fait de manière très simple, puisqu'il suffit de le raccorder en amont à un bus d'entrée via ses bornes d'entrée 18, puis de relier, par exemple, ses premières bornes de couplage 22 aux deuxièmes bornes de couplage 24 du module précédent, et de relier ses deuxièmes bornes de couplage 24 aux premières bornes de couplage 22 du module suivant. Il est entendu que si le module supplémentaire est en dernière position, le module suivant est le premier module, et si le module supplémentaire est en première position, le module précédent est le dernier module. Le module supplémentaire est enfin raccordé en aval aux bornes de sortie du système via ses bornes de sortie 20.

**Revendications**

1. Système de conversion d'au moins un courant électrique continu d'entrée en un courant électrique alternatif de sortie comportant une pluralité M de phases et délivré en M bornes de sortie (U, V, W), chaque borne de sortie (U, V, W) correspondant à une phase du courant de sortie, du type comprenant :

   - N onduleurs polyphasés (2A, 2B, 2C), connectés en parallèle les uns des autres et reliés chacun à un bus (4A, 4B, 4C ; 4) de circulation d'un courant électrique continu d'entrée, chaque onduleur (2A, 2B, 2C) étant propre à convertir le courant continu d'entrée en un courant alternatif intermédiaire comportant M phases et délivré en M bornes intermédiaires (U1 à U3, V1 à V3, W1 à W3), chaque borne intermédiaire (U1 à U3, V1 à V3, W1 à W3) correspondant à une phase du courant intermédiaire ;
   - N x M premières bobines électromagnétiques de couplage (8), chacune étant reliée par une de ses extrémités à une borne respective des M bornes intermédiaires (U1, V1, W1, U2, V2, W2, U3, V3, W3) d'un des N onduleurs polyphasés (2A, 2B, 2C) ;
   - N x M noyaux magnétiques (10), chaque première bobine électromagnétique (8) étant enroulée autour d'un noyau (10) respectif,

   **caractérisé en ce qu'**il comprend N x M deuxièmes bobines électromagnétiques de couplage (14), chacune étant reliée par une de ses extrémités à l'autre extrémité d'une première bobine de couplage (8) respective et enroulée autour d'un noyau (10) distinct de celui de la première bobine (8) respective, **en ce qu'**une première bobine de couplage (8) et une deuxième bobine de couplage (14) sont enroulées autour de chaque noyau (10), **en ce que** les première et deuxième bobines (8, 14) d'un même noyau (10) correspondent à une même phase de chaque courant alternatif intermédiaire, et **en ce que** les premières, respectivement les deuxièmes, bobines électromagnétiques (8, 14) sont destinées à être parcourues par un courant respectif de mode commun, et agencées de telle sorte que, pour chaque noyau magnétique (10), le flux de mode commun généré par la première bobine (8) est de sens opposé au flux de mode commun généré par la deuxième bobine (14), chaque borne de sortie (U, V, W) du système étant reliée aux autres extrémités des M deuxièmes bobines (14) correspondant à une même phase des courants alternatifs intermédiaires.

2. Système de conversion selon la revendication 1, **caractérisé en ce que** les premières, respectivement les deuxièmes, bobines électromagnétiques (8, 14) sont toutes enroulées dans un même sens respectif autour de leur noyau (10).

3. Système de conversion selon la revendication 1 ou 2, **caractérisé en ce que** les premières bobines (8) et les deuxièmes bobines (14) sont toutes identiques et ont un même nombre (NbS) de spires.

4. Système de conversion selon l'une quelconque des revendications précédentes, **caractérisé en ce que** les noyaux magnétiques (10) sont tous identiques et ont une même valeur de réluctance (Rnoyau).

5. Système de conversion selon l'une quelconque des revendications précédentes, **caractérisé en ce qu'**il comprend, pour chaque onduleur (2A, 2B, 2C), un coupleur magnétique (6A, 6B, 6C) comportant les M noyaux magnétiques (10) associés à un onduleur (2A, 2B, 2C) respectif, et équipés des M premières bobines de couplage (8) et des M deuxièmes bobines de couplage (14), et **en ce que** les M noyaux magnétiques (10) de chaque coupleur magnétique (6A, 6B, 6C) sont reliés entre eux par des barreaux magnétiques de liaison (12).

6. Système de conversion selon l'une quelconque des revendications précédentes, **caractérisé en ce qu'**il comporte N bus (4A, 4B, 4C) distincts de circulation d'un courant continu d'entrée, chaque bus étant associé à un onduleur respectif.

7. Système de conversion selon l'une quelconque des revendications 1 à 5, **caractérisé en ce qu'**il comprend un unique bus (4) de circulation du courant continu d'entrée, commun aux N onduleurs polyphasés (2A, 2B, 2C).

8. Système de conversion selon l'une quelconque des revendications 5 à 7, **caractérisé en ce que** chaque coupleur magnétique (6A, 6B, 6C) comporte en outre au moins une colonne magnétique de retour (28) reliée par les barreaux magnétiques de liaison (12) aux M noyaux magnétiques (10) du coupleur.

9. Système de conversion selon l'une quelconque des revendications 5 à 8, **caractérisé en ce que** chaque deuxième bobine électromagnétique de couplage (14) d'un coupleur magnétique (6A, 6B) est reliée à la première bobine électromagnétique de couplage (8) correspondante du coupleur magnétique suivant (6B, 6C), chaque deuxième bobine électromagnétique (14) de couplage du dernier coupleur magnétique (6C) étant reliée à la première bobine électromagnétique de couplage (8) correspondante du premier coupleur magnétique (6A).

10. Système de conversion selon l'une quelconque des revendications précédentes, **caractérisé en ce que** les première et deuxième bobines électromagnétiques (8, 14) correspondant à un même noyau (10) sont enroulées de manière concentrique autour dudit noyau (10).

11. Système de conversion selon l'une quelconque des revendications 1 à 9, **caractérisé en ce que** les première et deuxième bobines électromagnétiques (8, 14) enroulées autour d'un même noyau (10) sont disposées de manière successive le long dudit noyau (10).

12. Module de conversion (16A, 16B, 16C) d'un courant électrique continu d'entrée fourni en deux bornes d'entrée (18), en un courant électrique alternatif de sortie comportant une pluralité M de phases et délivré en M bornes de sortie (20), chaque borne de sortie (20) correspondant à une phase du courant de sortie, **caractérisé en ce qu'**il comprend :

   - un unique onduleur polyphasé (2A, 2B, 2C), propre à être relié, via les deux bornes d'entrée (18), à un bus (4A, 4B, 4C ; 4) de circulation d'un courant électrique continu d'entrée, et à convertir le courant continu d'entrée en un courant alternatif intermédiaire comportant M phases et délivré en M bornes intermédiaires (U1 à U3, V1 à V3, W1 à W3), chaque borne intermédiaire (U1 à U3, V1 à V3, W1 à W3) correspondant à une phase du courant intermédiaire ;
   - M premières bobines électromagnétiques de couplage (8), chacune étant reliée par une de ses extrémités à une borne respective des M bornes intermédiaires (U1, V1, W1, U2, V2, W2, U3, V3, W3) de l'onduleur polyphasé (2A, 2B, 2C), et par l'autre de ses extrémités à une première borne de couplage (22) ;
   - M deuxièmes bobines électromagnétiques de couplage (14), chacune étant reliée par une de ses extrémités à une borne respective des M bornes de sortie (20), et par l'autre de ses extrémitrés à une deuxième borne de couplage (24) ;
   - M noyaux magnétiques (10), une première bobine de couplage (8) et une deuxième bobine de couplage (14) étant enroulées autour de chaque noyau (10) respectif.

13. Module de conversion (16A, 16B, 16C) selon la revendication 12, **caractérisé en ce que** les M noyaux magnétiques (10) sont reliés entre eux par des barreaux magnétiques de liaison (12).

14. Module de conversion (16A, 16B, 16C) selon la revendication 12 ou 13, **caractérisé en ce qu'**il comporte en outre au moins une colonne magnétique de retour (28) reliée par les barreaux magnétiques de liaison (12) aux M noyaux magnétiques (10).

15. Module de conversion (16A, 16B, 16C) selon l'une quelconque des revendications 12 à 14, **caractérisé en ce qu'**il comporte une armoire de protection (26) dans laquelle sont agencés l'onduleur polyphasé (2A, 2B, 2C) et les M noyaux magnétiques (10) équipés chacun d'une première bobine électromagnétique de couplage (8) et d'une deuxième bobine électromagnétique de couplage (14) respectives, et **en ce que** les deux bornes d'entrée (18), les M bornes de sortie (20), les M premières bornes de couplage (22) et les M deuxièmes bornes de couplage (24) sont fixées à l'armoire (26) et accessibles depuis l'extérieur de l'armoire (26).

16. Système de conversion d'au moins un courant électrique continu d'entrée en un courant électrique alternatif de sortie comportant une pluralité M de phases et délivré en M bornes de sortie (U, V, W), chaque borne de sortie (U, V, W) correspondant à une phase du courant de sortie, **caractérisé en ce qu'**il comporte une pluralité N de modules de conversion (16A, 16B, 16C) selon l'une quelconque des revendications 12 à 15, **en ce que** les N modules de conversion (16A, 16B, 16C) sont connectés en parallèle les uns des autres, les N bornes de sortie (20) de chaque module (16A, 16B, 16C) respectif qui correspondent à une même phase du courant de sortie étant reliées entre elles, et en ce chaque première borne de couplage (22) d'un module de conversion (16A, 16B, 16C) est reliée à une deuxième borne de couplage (24) d'un autre module de conversion (16A, 16B, 16C) par un câble électrique, de sorte que les première et deuxième bobines de couplage associées (8, 14) correspondent à une même phase de chaque courant alternatif intermédiaire, et **en ce que** les premières, respectivement les deuxièmes, bobines électromagnétiques (8, 14) sont destinées à être parcourues par un courant respectif de mode commun, et agencées de telle sorte que, pour chaque noyau magnétique (10), le flux de mode commun généré par la première bobine (8) est de sens opposé au flux de mode commun généré par la deuxième bobine (14).

**17.** Equipement électrique de puissance, **caractérisé en ce qu'**il comporte au moins un système de conversion selon l'une quelconque des revendications 1 à 11 et 16.

**Patentansprüche**

**1.** System zum Wandeln mindestens eines elektrischen Eingangs-Gleichstroms in einen elektrischen Wechselstrom mit einer Mehrzahl M von Phasen und geliefert an M Ausgangsanschlüsse (U, V, W), wobei jeder Ausgangsanschluss (U, V, W) einer Ausgangsstromphase entspricht, von der Art, die aufweist:

- N Polyphasen-Inverter (2A, 2B, 2C), die parallel zueinander geschaltet sind und jeweils mit einem Bus (4A, 4B, 4C; 4) zum Zirkulieren eines elektrischen Eingangs-Gleichstroms verbunden sind, wobei jeder Inverter (2A, 2B, 2C) geeignet ist, den Eingangs-Gleichstrom in einen Zwischenwechselstrom mit M Phasen und geliefert an M Zwischenanschlüsse (U1 bis U3, V1 bis V3, W1 bis W3), wobei jeder Zwischenanschluss (U1 bis U3, V1 bis V3, W1 bis W3) einer Phase des Zwischenstroms entspricht, umzuwandeln;
- N x M erste elektromagnetische Koppelspulen (8), wobei jede mit einem ihrer Enden mit einem jeweiligen Anschluss der M Zwischenanschlüsse (U1 bis U3, V1 bis V3, W1 bis W3) einer der N Polyphasen-Inverter (2A, 2B, 2C) verbunden ist;
- N x M magnetische Kerne (10), wobei jede erste elektromagnetische Spule (8) um einen jeweiligen Kern (10) gewickelt ist,

dadurch charakterisiert, dass es N x M zweite elektromagnetische Koppelspulen (14) aufweist, wobei jede mit einem seiner Enden mit dem anderen Ende einer jeweiligen ersten Koppelspule (8) verbunden ist und um einen Kern (10) gewickelt ist, verschieden von dem der jeweiligen ersten Spule (8), dadurch, dass eine erste Koppelspule (8) und eine zweite Koppelspule (14) um jeden Kern (10) gewickelt sind, dadurch, dass die erste und die zweite Spule (8, 14) desselben Kerns (10) derselben Phase jedes Zwischenwechselstroms entsprechen und dadurch, dass die ersten bzw. die zweiten elektromagnetischen Spulen (8, 14) dazu vorgesehen sind, von einem jeweiligen Gleichtaktstrom durchlaufen zu werden und auf solche Weise eingerichtet sind, dass, für jeden magnetischen Kern (10) der Gleichtaktfluss, der von der ersten Spule (8) erzeugt wird, die entgegengesetzte Richtung zu dem Gleichtaktfluss hat, der von der zweiten Spule (14) erzeugt wird, wobei jeder Ausgangsanschluss (U, V, W) des Systems mit den anderen Enden der M zweiten Spulen (14), die derselben Phase der Zwischenwechselströme entsprechen, verbunden ist.

**2.** System zum Wandeln gemäß Anspruch 1, dadurch charakterisiert, dass die ersten bzw. die zweiten elektromagnetischen Spulen (8, 14) alle in demselben jeweiligen Sinn um ihren Kern (10) gewickelt sind.

**3.** System zum Wandeln gemäß Anspruch 1 oder 2, dadurch charakterisiert, dass die ersten Spulen (8) und die zweiten Spulen (14) alle identisch sind oder dieselbe Anzahl (NbS) von Windungen haben.

**4.** System zum Wandeln gemäß einem der vorhergehenden Ansprüche, dadurch charakterisiert, dass die magnetischen Kerne (10) alle identisch sind und dieselbe Reluktanz (Rspule) haben.

**5.** System zum Wanden gemäß einem der vorhergehenden Ansprüche, dadurch charakterisiert, dass es aufweist, für jeden Inverter (2A, 2B, 2C), einen magnetischen Koppler (6A, 6B, 6C), der die M magnetischen Kerne (10), die zu einem jeweiligen Inverter (2A, 2B, 2C) gehören und die mit den M ersten Koppelspulen (8) und den M zweiten Koppelspulen (14) ausgestattet sind, aufweist, und dadurch, dass die M magnetischen Kerne (10) jedes magnetischen Kopplers (6A, 6B, 6C) miteinander mittels magnetischer Verbindungsstäbe (12) verbunden sind.

**6.** System zum Wandeln gemäß einem der vorhergehenden Ansprüche, dadurch charakterisiert, dass es N unterschiedliche Busse (4A, 4B, 4C) zum Zirkulieren eines Eingangs-Gleichstroms aufweist, wobei jeder Bus einem jeweiligen Inverter zugeordnet ist.

**7.** System zum Wandeln gemäß einem der Ansprüche 1 bis 5, dadurch charakterisiert, dass es einen einzigen Bus (4) zum Zirkulieren des Eingangs-Gleichstroms gemeinsam für die N Polyphasen-Inverter (2A, 2B, 2C) aufweist.

**8.** System zum Wandeln gemäß einem der Ansprüche 5 bis 7, dadurch charakterisiert, dass jeder magnetische Koppler (6A, 6B, 6C) außerdem mindestens eine magnetische Rückführsäule (28), die mittels der magnetischen Verbindungsstäbe (12) mit den M magnetischen Kernen (10) des Kopplers verbunden ist, aufweist.

9. System zum Wandeln gemäß einem der Ansprüche 5 bis 8, dadurch charakterisiert, dass jede zweite elektromagnetische Koppelspule (14) eines magnetischen Kopplers (6A, 6B) mit der ersten elektromagnetischen Koppelspule (8), die zu dem nachfolgenden magnetischen Koppler (6B, 6C) gehört, gekoppelt ist, wobei jede zweite elektromagnetische Koppelspule (14) des letzten magnetischen Kopplers (6C) mit der ersten elektromagnetischen Koppelspule (8), die zu dem ersten magnetischen Koppel (6A) gehört, verbunden ist.

10. System zum Wandeln gemäß einem der vorhergehenden Ansprüche, dadurch charakterisiert, dass die ersten magnetischen Spulen und die zweiten elektromagnetische Spulen (8, 14), die zu demselben Kern (10) gehören, konzentrisch um den Kern (10) gewickelt sind.

11. System zum Wandeln gemäß einem der Ansprüche 1 bis 9, dadurch charakterisiert, dass die ersten magnetischen Spulen und die zweiten magnetischen Spulen (8, 14), die um denselben Kern (10) gewickelt sind, auf aufeinanderfolgende Weise um den Kern (10) gewickelt sind.

12. Modul zum Wandeln (16A, 16B, 16C) eines elektrischen Eingangsgleichstroms, geliefert an zwei Eingangsanschlüsse (18) in einen elektrischen Ausgangswechselstrom, der eine Mehrzahl M von Phasen aufweist und an M Ausgangsanschlüsse (20) geliefert wird, wobei jeder Ausgangsanschluss (20) einer Phase des Ausgangsstroms entspricht, dadurch charakterisiert, dass es aufweist:

  - einen einzigen Polyphaseninverter (2A, 2B, 2C), dazu geeignet, mittels der beiden Eingangsanschlüsse (18) mit einem Bus (4A, 4B, 4C; 4) zum Zirkulieren eines elektrischen Eingangsgleichstroms verbunden zu werden und den Eingangsgleichstrom in einen Zwischenwechselstrom mit M Phasen und geliefert an M Zwischenanschlüsse (U1 bis U3, V1 bis V3, W1 bis W3) umzuwandeln, wobei jeder Zwischenanschluss (U1 bis U3, V1 bis V3, W1 bis W3) einer Phase des Zwischenstroms entspricht;
  - M erste elektromagnetische Koppelspulen (8), wobei jede mittels einem ihrer Enden mit einem jeweiligen Anschluss der M Zwischenanschlüsse (U1, V1, W1, U2, V2, W2, U3, V3, W3) des Polyphaseninverters (2A, 2B, 2C) und mittels dem anderen ihrer Enden mit einem ersten Koppelanschluss (22) verbunden ist;
  - M zweite elektromagnetische Koppelspulen (14), wobei jede mittels einem ihrer Enden mit einem jeweiligen Anschluss der M Ausgangsanschlüsse (20) und mittels dem anderen ihrer Enden mit einem zweiten Koppelanschluss (24) verbunden ist;
  - M magnetische Kerne (10), wobei eine erste Koppelspule (8) und eine zweite Koppelspule (14) um jeden jeweiligen Kern (10) gewickelt sind.

13. Modul zum Wandeln (16A, 16B, 16C) gemäß Anspruch 12, dadurch charakterisiert, dass die M magnetischen Kerne (10) miteinander mittels magnetischer Verbindungsstäbe (12) verbunden sind.

14. Modul zum Wandeln (16A, 16B, 16C) gemäß dem Anspruch 12 oder 13, dadurch charakterisiert, dass es außerdem mindestens eine magnetische Rückführsäule (28), die mittels der magnetischen Verbindungsstäbe (12) mit den M magnetischen Kernen (10) verbunden ist, aufweist.

15. Modul zum Wandeln (16a, 16B, 16C) gemäß einem der Ansprüche 12 bis 14, dadurch charakterisiert, dass es ein Schutzgehäuse (26) aufweist, in dem der Pholyphaseninverter (2A, 2B, 2C) und die M magnetischen Kerne (10), die jeweils mit einer jeweiligen ersten elektromagnetischen Koppelspule (8) und einer jeweiligen zweiten elektromagnetischen Koppelspule (14) ausgestattet sind, angeordnet sind, und dadurch, dass die beiden Eingangsanschlüsse (18), die M Ausgangsanschlüsse (20), die M ersten Koppelanschlüsse (22) und die M zweiten Koppelanschlüsse (24) an dem Gehäuse (26) befestigt sind und von außerhalb des Gehäuses (26) zugänglich sind.

16. System zum Wandeln mindestens eines elektrischen Eingangsgleichstroms in einen elektrischen Ausgangwechselstrom mit einer Mehrzahl M von Phasen und geliefert an M Ausgangsanschlüsse (U, V, W), wobei jeder Ausgangsanschluss (U, V, W) einer Phase des Ausgangsstroms entspricht, dadurch charakterisiert, dass es eine Mehrzahl N von Modulen zum Wandeln (16A, 16B, 16C) gemäß einem der Ansprüche 12 bis 15 aufweist, dadurch, dass die N Module zum Wandeln (16A, 16B, 16C) parallel zueinander geschaltet sind, wobei die N Ausgangsanschlüsse (20) jedes jeweiligen Moduls (16A, 16B, 16C), die zu derselben Phase des Ausgangsstroms gehören, miteinander verbunden sind und dadurch, dass jeder erste Koppelanschluss (22) eines Moduls zum Wandeln (16A, 16B, 16C) mit einem zweiten Koppelanschluss (24) eines anderen Moduls zum Wandeln (16A, 16B, 16C) mittels eines Elektrokabels in der Art verbunden ist, dass die zusammengehörenden ersten und zweiten Koppelspulen (8, 14) zu derselben Phase jedes Zwischenwechselstroms gehören, und dadurch, dass die ersten bzw. die zweiten elektromagnetischen Spulen (8, 14) dazu vorgesehen sind, von einem jeweiligen Gleichtaktstrom durchlaufen zu werden und derart eingerichtet sind, dass, für jeden magnetischen Kern (10) der Gleichtaktfluss, der von der ersten Spule (8) erzeugt wird, die entgegengesetzte Richtung zu dem Gleichtaktfluss hat, der von der zweiten Spule (14) erzeugt wird.

**17.** Elektrisches Leistungsgerät, dadurch charakterisiert, dass es mindestens ein System gemäß einem der Ansprüche 1 bis 11 und 16 aufweist.

**Claims**

**1.** System for converting at least one electrical input direct current into an electrical output alternating current comprising a plurality M of phases and supplied to M output terminals (U, V, W), each output terminal (U, V, W) corresponding to one phase of the output current, of the type comprising:

- N polyphase inverters (2A, 2B, 2C), connected in parallel with each other and each connected to a bus (4A, 4B, 4C; 4) for circulation of an electrical input direct current, each inverter (2A, 2B, 2C) being suitable for converting the input direct current into an intermediate alternating current comprising M phases and supplied to M intermediate terminals (U1-U3, V1-V3, W1-W3), each intermediate terminal (U1-U3, V1-V3, W1-W3), corresponding to one phase of the intermediate current;

- N x M first electromagnetic coupling coils (8), each being connected by one of its ends to a respective terminal of the M intermediate terminals (U1, V1, W1, U2, V2, W2, U3, V3, W3) of one of the N polyphase inverters (2A, 2B, 2C) ;

- N x M magnetic cores (10), each first electromagnetic coil (8) being wound around a respective core (10),

**characterized in that** it comprises N x M second electromagnetic coupling coils (14), each being connected by one of its ends to the other end of a respective first coupling coil (8) and wound around a distinct core (10) from that of the respective first coil (8), **in that** a first coupling coil (8) and a second coupling coil (14) are wound around each core (10), **in that** the first and second coils (8, 14) of a same core (10) correspond to a same phase of each intermediate alternating current, and **in that** the first and second electromagnetic coils (8, 14) respectively are intended to be passed through by a respective common mode current, and arranged in such a way that for each magnetic core (10), the common mode flux generated by the first coil (8) is of the opposite direction to the common mode flux generated by the second coil (14), each output terminal (U, V, W) of the system being connected to the other ends of the M second coils (14) corresponding to a same phase of the intermediate alternating currents.

**2.** Conversion system according to claim 1, **characterized in that** the first and second electromagnetic coils (8, 14) are all wound in a same respective direction around their core (10).

**3.** Conversion system according to claim 1 or 2, **characterized in that** the first coils (8) and the second coils (14) are all identical, and have the same number (NbS) of turns.

**4.** Conversion system according to any one of the preceding claims, **characterized in that** the magnetic cores (10) are all identical, and have the same reluctance value (Rnoyau).

**5.** Conversion system according to any one of the preceding claims, **characterized in that** it comprises, for each inverter (2A, 2B, 2C), a magnetic coupler including the M magnetic cores (10), associated with a respective inverter (2A, 2B, 2C), and equipped with the M first coupling coils (8) and M second coupling coils (14), and **in that** the M magnetic cores (10) of each magnetic coupler (6A, 6B, 6C) are connected to each other by magnetic linking bars (12).

**6.** Conversion system according to any one of the preceding claims, **characterized in that** it includes N distinct buses (4A, 4B, 4C) for circulating an input direct current, each bus being associated with a respective inverter.

**7.** Conversion system according to any one of claims 1 to 5, **characterized in that** it includes a single bus (4) for circulating the input direct current, common to the N polyphase inverters (2A, 2B, 2C).

**8.** Conversion system according to any one of claims 5 to 7, **characterized in that** each magnetic coupler (6A, 6B, 6C) also includes at least one return magnetic column (28), which is connected by the magnetic linking bars (12) to the M magnetic cores (10) of the coupler.

9.  Conversion system according to any one of claims 5 to 8, **characterized in that** each second electromagnetic coupling coil (14) of a magnetic coupler (6A, 6B) is connected to the corresponding first electromagnetic coupling coil (8) of the following magnetic coupler (6B, 6C), each second electromagnetic coupling coil (14) of the last magnetic coupler (6C) being connected to the corresponding first electromagnetic coupling coil (8) of the first magnetic coupler (6A).

10. Conversion system according to any one of the preceding claims, **characterized in that** the first and second electromagnetic coils (8, 14) corresponding to a single core (10) are wound concentrically around said core (10).

11. Conversion system according to any one of claims 1 to 9, **characterized in that** the first and second electromagnetic coils (8, 14) which are wound around a same core (10) are arranged in succession along said core (10).

12. Conversion module (16A, 16B, 16C) for converting an electrical input direct current which is supplied at two input terminals (18) into an electrical output alternating current comprising a plurality M of phases and supplied to M output terminals (20), each output terminal (20) corresponding to one phase of the output current, **characterized in that** it comprises:

    - a single polyphase inverter (2A, 2B, 2C) which is suitable for being connected, via the two input terminals (18), to a bus (4A, 4B, 4C; 4) for circulating an electrical input direct current, and for converting the input direct current into an intermediate alternating current comprising M phases and supplied to M intermediate terminals (U1-U3, V1-V3, W1-W3), each intermediate terminal (U1-U3, V1-V3, W1-W3) corresponding to one phase of the intermediate current;
    - M first electromagnetic coupling coils (8), each being connected by one of its ends to a respective terminal of the M intermediate terminals (U1-U3, V1-V3, W1-W3) of the polyphase inverter (2A, 2B, 2C), and by the other of its ends to a first coupling terminal (22);
    - M second electromagnetic coupling coils (14), each being connected by one of its ends to a respective terminal of the M output terminals (20), and by the other of its ends to a second coupling terminal (24);
    - M magnetic cores (10), a first coupling coil (8) and a second coupling coil (14) being wound around each respective core (10).

13. Conversion module (16A, 16B, 16C) according to claim 12, **characterized in that** the M magnetic cores (10) are connected to each other by magnetic linking bars (12) .

14. Conversion module (16A, 16B, 16C) according to claim 12 or 13, **characterized in that** it also includes at least one return magnetic column (28), which is connected by the magnetic linking bars (12) to the M magnetic cores (10).

15. Conversion module (16A, 16B, 16C) according to any one of claims 12 to 14, **characterized in that** it includes a protective cabinet (26), in which are arranged the polyphase inverter (2A, 2B, 2C) and the M magnetic cores (10), each equipped with a respective first electromagnetic coupling coil (8) and second electromagnetic coupling coil (14), and **in that** the two input terminals (18), the M output terminals (20), the M first coupling terminals (22) and the M second coupling terminals (24) are fixed to the cabinet (26) and accessible from outside the cabinet (26).

16. Conversion system for converting at least one electrical input direct current into an electrical output alternating current, comprising a plurality M of phases and supplied to M output terminals (U, V, W), each output terminal (U, V, W) corresponding to a phase of the output current, **characterized in that** it comprises a plurality N of conversion modules (16A, 16B, 16C) according to any one of claims 12 to 15, **in that** the N conversion modules (16A, 16B, 16C) are connected in parallel with each other, the N output terminals (20) of each respective module (16A, 16B, 16C) corresponding to a same phase of the output current being connected to each other, and **in that** each first coupling terminal (22) of a conversion module (16A, 16B, 16C) is connected to a second coupling terminal (24) of another conversion module (16A, 16B, 16C) by an electrical cable, in such a way that the associated first and second coupling coils (8, 14) correspond to a same phase of each intermediate alternating current, and **in that** the first and second electromagnetic coils (8, 14) respectively are intended to be passed through by a respective common mode current, and arranged in such a way that for each magnetic core (10), the common mode flux generated by the first coil (8) is of the opposite direction to the common mode flux generated by the second coil (14).

17. Electrical power equipment, **characterized in that** it includes at least one conversion system according to any one of claims 1 to 11 and 16.

# FIG.1
## (ART ANTERIEUR)

FIG.2

FIG.3

FIG.4

FIG.5

**FIG.6**

$V_{h1}$   $I_{h1}$   Lh1

$V_{h2}$   $I_{h2}$   Lh2

$V_{h3}$   $I_{h3}$   Lh3

## FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6169677 B